# EUROPEAN PATENT SPECIFICATION

(11) **EP 4 089 500 B1**
(45) Date of publication and mention of the grant of the patent: **08.04.2026**
(21) Application number: 21826487.7
(22) Date of filing: 19.02.2021
(51) Int. Cl.: G05D 1/00

(54) **WORKING ROBOT SYSTEM**
ARBEITSROBOTERSYSTEM
SYSTÈME DE ROBOT DE TRAVAIL

(30) Priority: 18.06.2020 JP 2020105323
(43) Date of publication of application: 16.11.2022
(73) Proprietor: Yamabiko Corporation, Ohme-shi Tokyo 198-8760 (JP)
(72) Inventor: FUSE, Yoichi, Ohme-shi, Tokyo 198-8760 (JP); KANEKO, Kazuhiro, Ohme-shi, Tokyo 198-8760 (JP); NAKATSUGI, Koichi, Ohme-shi, Tokyo 198-8760 (JP)
(74) Representative: Canzler & Bergmeier Patentanwälte Partnerschaft mbB
(86) International application number: PCT/JP2021/006389
(87) International publication number: WO 2021/256003

(56) References cited:
- JP-A- 2018 092 401
- JP-A- 2018 117 564
- US-A1- 2018 249 874
- US-A1- 2019 025 838

## Description

### Technical field

The present invention relates to a working robot system configured to perform work such as mowing while autonomously traveling.

### Background art

Conventionally, there has been known a working robot configured to perform work such as mowing along a traveling route while autonomously traveling in a working region. The working robot autonomously travels such that the actual location of the working robot is located in the set working region, by utilizing a global navigation satellite system such as a GPS, or detecting the reference position of an electronic tag or wire installed in a work site.

Japanese Patent No. 5973608 as conventional art describes that a controller of the working robot divides the working region into a plurality of regions via a virtual boundary designated in advance by a user to set a preferential working region in the working region, and controls a traveling device of a machine to allow the machine to autonomously travel in the set preferential working region. Here, when determining that the detected position of the machine reaches the virtual boundary, the controller turns the machine to the preferential working region.

US 2018/0249874 A1 discloses a management device that controls an autonomous robot in form of a cleaner and includes a processing circuitry that obtains an electronic floor plan of a predetermined space being a cleaning range. The management device estimates a person-present position at which a person is present in the predetermined space, and divides the predetermined space into a plurality of cleaning target areas to be individually cleaned by the autonomous cleaner. The management device further identifies a cleaning target area including the person-present position where the person is estimated to be present, as a person-present cleaning target area. The management device further identifies a cleaning target area around the person-present cleaning target area as a surrounding cleaning target area.

### Summary of Invention

### Technical Problem

With the above-described conventional art disclosed in Japanese Patent No. 5973608, the user needs to set the virtual boundary to define the preferential working region, and therefore there is a problem with an increase in the burden on the user for the setting before the work. In addition, when setting the virtual boundary, the user may not know the current workable time for the working robot, and therefore the work of working robot in the defined preferential working region stops halfway, or the work cannot be finished in a desired period of time because the defined preferential working region is too large. This causes a problem that it is not possible to efficiently finish the work in the defined preferential working region.

Meanwhile, there is an idea that a plurality of working regions are set before the work and the priority of the working regions is scheduled, but in this case, the above-described problem becomes more obvious. That is, when the plurality of working regions are set, it is not possible to previously know the working capacity of the working robot at the time of the end of the work in one working region. This causes a problem that in the case where the work for the plurality of working regions is performed according to the priority, even though the work in one working region may be finished, the work in the next working region may not be finished.

The present invention has been achieved to solve the above-described problems. It is therefore an object of the invention to provide a working robot capable of reducing the burden on the user for the setting before the work, and avoiding the situation that the work is not finished in the set working region to efficiently finish the work in the preferential working region.

### Solution to Problem

To achieve the above-described object, the present invention provides a working robot system according to claim 1.

### Advantageous effect

According to the invention, it is possible to reduce the burden on the user to set the preferential working region before the work performed by the working robot. In addition, according to the invention, it is possible to efficiently finish the work in the preferential working region.

### Brief Description of Drawings

Fig. 1 illustrates a working robot system;
Fig. 2 illustrates a working robot ((a) a side view, and (b) a plan view);
Fig. 3 is a block diagram illustrating the working robot system;
Fig. 4 illustrates a controller;
Fig. 5 illustrates examples of setting by a setting device ((a) an example of an inputted preferential location (inputted as a spot), and (b) an example of an outputted work boundary);
Fig. 6A illustrates examples of setting by the setting device ((a) an example of an inputted preferential location (inputted as line input), and (b) an example of an outputted work boundary);
Fig. 6B illustrates examples of setting by the setting device ((c) an example of an inputted preferential location (an input direction is shown), and (d) an example of outputted work boundaries);
Fig. 7 illustrates examples of setting by the setting device ((a) an example of inputted preferential location and non-preferential location, and (b) an example of outputted work boundary and non-working region) ;
Fig. 8 illustrates examples of setting by the setting device ((a) an example of inputted first, second and third preferential locations and an example of an outputted preferential working region for the first preferential location, and (b) an example of an outputted preferential working region for the second preferential location);
Fig. 9 illustrates an example of control flow of the controller;
Fig. 10 illustrates working modes ((a) random traveling in the work boundary, and (b) random traveling in an enlarged work boundary);
Fig. 11 illustrates a working mode (with turning to draw stripes); and
Fig. 12 illustrates a working mode (with turning to draw parallel stripes).

### Description of Embodiments

Hereinafter, an embodiment of the present invention will be described with reference to the drawings. The same reference numbers in the different drawings indicate the same functional parts, and therefore repeated description for each of the drawings is omitted.

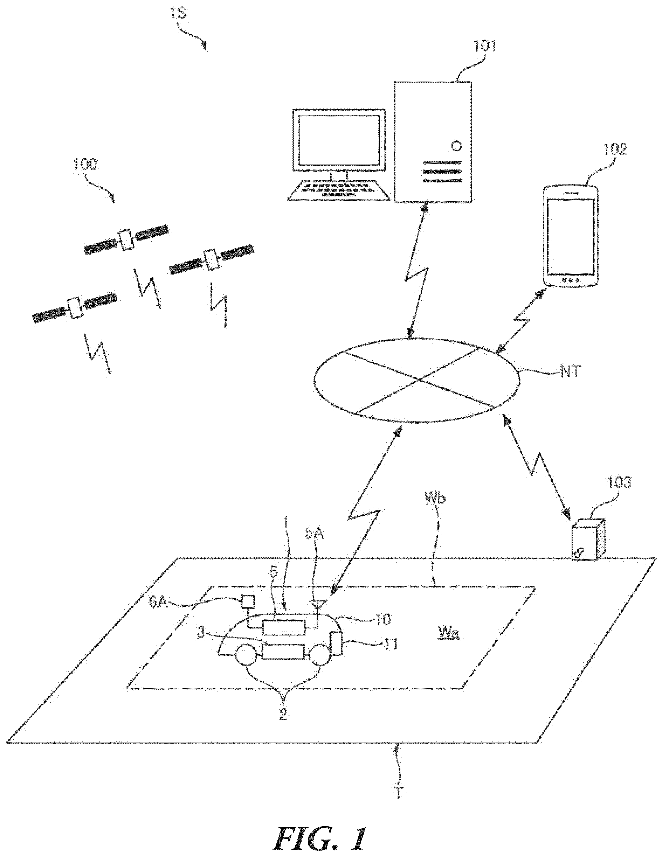

As illustrated in Fig. 1, a working robot system 1S is constituted by a working robot 1, and management equipment configured to manage the working robot 1. The management equipment includes a server 101, a mobile information terminal 102 belonging to a user, and a charging base 103, and each of them can transmit and receive signals to and from the working robot 1 via a network NT.

The working robot 1 includes a machine 10 and a traveling device 2 configured to be able to autonomously travel. The machine 10 includes a working device 3 configured to perform work along a traveling route of the machine 10. The working robot 1 also includes a controller 5 configured to control the traveling device 2 and the working device 3. A communication device 5A configured to transmit and receive signals to and from the management equipment via the network NT is connected to the controller 5.

Also, as an example, a GNSS (Global Navigation Satellite System) sensor 6A configured to receive a radio signal transmitted from a GNSS satellite 100 is connected to the controller 5, in order to detect the actual location of the machine 10 by utilizing a GNSS such as a GPS. In this case, by adopting an RTK-GPS system, the radio signal is received in a place such as the fixed charging base 103 to determine the location of the working robot 1, and therefore it is possible to more accurately measure the location of the moving working robot 1.

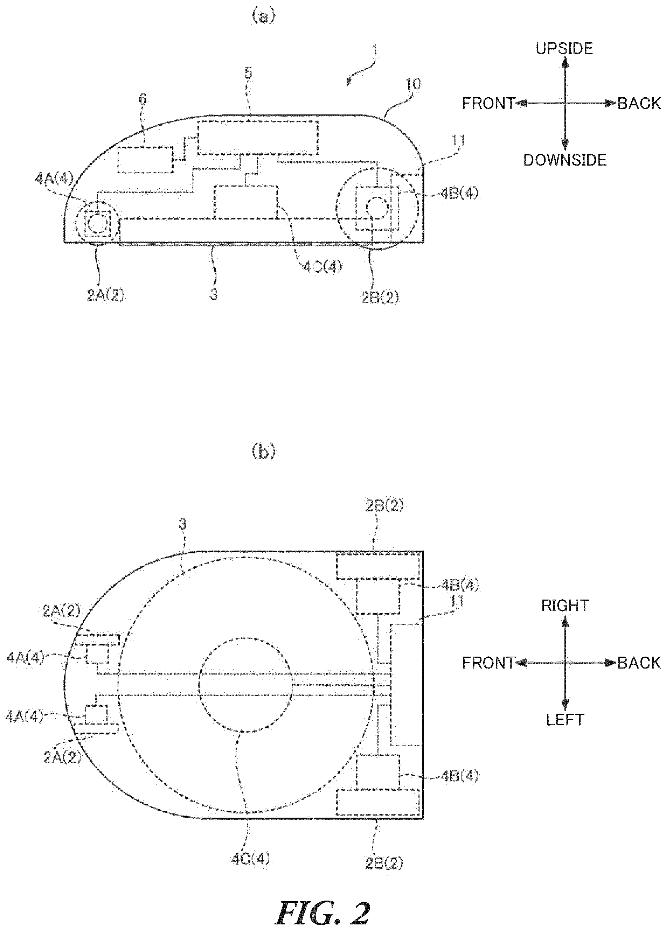

Fig. 2 illustrates an example of the configuration of the working robot 1. The illustrated traveling device 2 of the working robot 1 includes front wheels 2A and rear wheels 2B. The traveling device 2 can allow the machine 10 to autonomously travel toward any direction in a preferential working region Wa set in a work site T as illustrated in Fig. 1. Here, the preferential working region Wa is defined by a virtual work boundary Wb which can be recognized on map information by the working robot 1.

The machine 10 of the working robot 1 includes a driving device 4 configured to drive the traveling device 2 and the working device 3. With the example illustrated in Fig. 2, the driving device 4 includes a pair of right and left front wheel driving parts 4A and a pair of right and left rear wheel driving parts 4B, and also includes a working device driving part 4C configured to drive the working device 3. In addition, the working robot 1 includes a battery 11 as a power source for the driving device 4 and the controller 5.

The working device 3 of the working robot 1 is configured to perform work such as mowing work, dispersion work, and collection work, so that a working track is formed along the traveling route of the machine 10. Hereinafter, as an example, the working device 3 performing the mowing work will be described. With the example illustrated in Fig. 2, the working device 3 has a circular working range in a plane view, and mows grass just under the working device 3 by rotating a mowing blade (not illustrated) around a vertical axis. When this working device 3 is driven while the machine 10 is traveling, the working track through which the mowing work is done is formed along the traveling route of the machine 10. The width of the working track is the diameter of the circular working range of the working device 3 in a plane view.

The machine 10 of the working robot 1 includes a sensor 6. The sensor 6 includes various detectors such as the GNSS sensor 6A to allow the traveling device 2 to autonomously travel or to control the driving of the working device 3. The sensor 6 is provided in the front part of the machine 10, and a detection signal from the sensor 6 is transmitted to the controller 5.

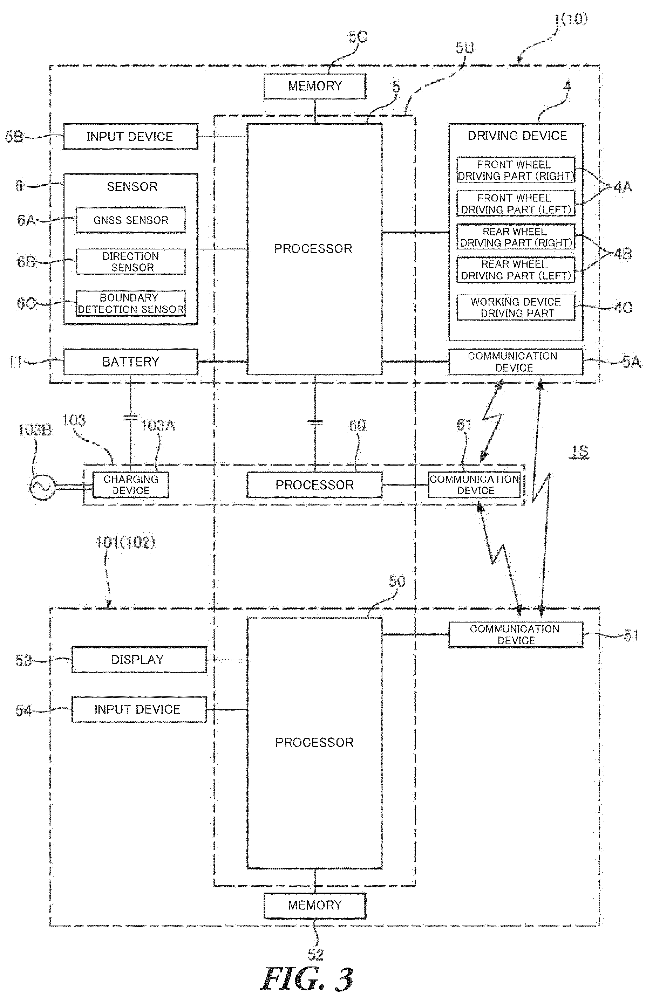

Fig. 3 is a block diagram illustrating an example of the configuration of the working robot system 1S. The driving device 4, the sensor 6, and the battery 11 are connected to the controller 5 of the working robot 1. Also, the communication device 5A, an input device 5B configured to input information to the controller 5, and a memory 5C configured to store the information inputted to the controller 5 are connected to the controller 5 of the working robot 1.

The sensor 6 includes the GNSS sensor 6A, a direction sensor 6B configured to detect the traveling direction of the machine 10, and a boundary detection sensor 6C configured to physically detect an electronic tag or wire installed at the position of the work boundary.

The server 101 includes a controller 50. A communication device 51 configured to connect the server 101 to the network, an input device 54 configured to input information to the controller 50, a memory 52 configured to store the information inputted to the controller 50, and a display 53 configured to display the control state of the controller 50 or the controller 5 are connected to the controller 50. Here, the mobile information terminal 102 belonging to the user has a function equivalent to that of the server 101.

The charging base 103 includes a charging device 103A connected to the battery 11. The charging device 103A converts, for example, commercial alternating-current power 103B into direct-current power and charges the battery 11. In addition, the charging base 103 may include a controller 60 and a communication device 61 connected to the controller 60.

The communication device 5A of the working robot 1, the communication device 51 of the server 101 or the mobile information terminal 102, and the communication device 61 of the charging base 103 are connected to each other via the network. Therefore, the controller 5 of the working robot 1, the controller 50 of the server 101 or the mobile information terminal 102, and the controller 60 of the charging base 103 can transmit and receive signals (information) to and from each other, and constitute one unified controller 5U.

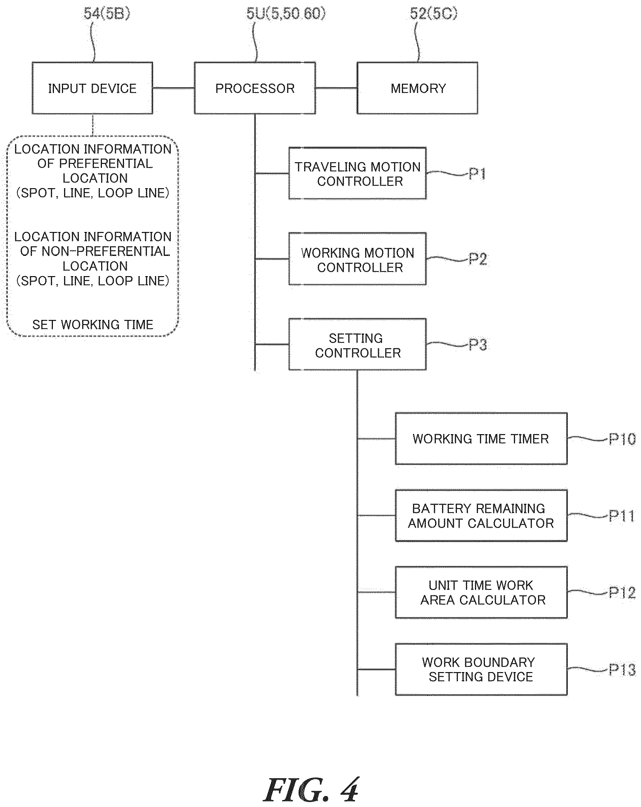

The control of the working robot system 1S is executed by incorporating a program having a function illustrated in Fig. 4 into the controller 5U. Part or the whole of the program executed by the controller 5U can be incorporated into the controller 5 of the working robot 1, the controller 50 of the server 101 or the mobile information terminal 102, and the controller 60 of the charging base 103. Here, among the management equipment such as the server 101, the mobile information terminal 102 and the charging device 103, the management equipment without the program essential to the working robot system 1S may be omitted accordingly.

A traveling motion controller P1 selects a working mode described later, and controls to allow the working robot 1 to autonomously travel in the set preferential working region. In this case, the traveling motion controller P1 detects the actual location of the working robot 1 by the output of the sensor 6, and determines whether the actual location reaches the vicinity of the set work boundary. When the working robot 1 moving forward reaches the vicinity of the work boundary, the machine 10 is turned to allow the machine 10 to move forward to the preferential working region, and then is moved forward.

A working motion controller P2 controls the working device driving part 4C configured to drive the working device 3 so that desired working motion can be acquired. As a specific example, the working motion controller P2 controls on and off of the working device 3, controls the rotating speed of the blade of the working device 3, and controls the motion of the working device 3 in the energy saving mode.

A setting controller P3 basically sets the working region in which the working robot 1 performs the work. To be more specific, the setting controller P3 controls to set the work boundary to define the preferential working region where the work can be finished, in view of the work capacity of the working robot 1, based on the location information of the preferential working location set by the input from the input device 54 (5B).

Here, the work capacity of the working robot 1 is related to the charging of the battery, is equivalent to the area which can be handled, and depends on the capacity of the internal memory of the working robot 1. The setting controller P3 knows the work capacity of the working robot 1, and sets the work boundary to define the preferential working region where the work can be finished, based on the charging capacity of the battery, the workable area, and the memory capacity, which are determined in advance.

The memory capacity is determined based on the charging capacity of the battery and the workable area, and the map of the preferential working region is stored. The working robot 1 does not need to store the maps of all of the working regions, and therefore the memory 5C does not need to have a large capacity. For example, the charging base 103 or the server 101 stores all the maps, and the working robot 1 takes the map of only the preferential working region into the memory 5C.

In addition, the setting controller P3 controls to set the work boundary to define the preferential working region where the work can be finished, in view of the current work capacity of the working robot 1, based on the location information of the preferential location set by the input from the input device 54 (5B).

In order to know the current work capacity of the working robot 1, the setting controller P3 includes a working time timer P10, a battery remaining amount calculator P11, and a unit time work area calculator P12.

The working time timer P10 measures the working time for the work performed in the previous stage, and calculates the remaining amount of time of the set working time.

The battery remaining amount calculator P11 calculates the amount of the remaining power in the battery as a percentage at the time of the end of the work in the previous stage.

The unit time work area calculator P12 calculates the workable area per unit of time, based on the work area (the area of the preferential working region) of the work performed in the previous stage, and the working time. The work area per unit of time is calculated, and therefore it is possible to know the area which can be handled in the remaining amount of time of the set working time, as the current work capacity.

The work area per unit of time varies depending on the working speed (traveling speed) set by the traveling motion controller P1, and the working motion mode (energy saving mode, normal mode, and power mode) set by the working motion controller P2. Therefore, when the setting is changed, the calculated values are corrected according to the changed setting.

After knowing the current work capacity of the working robot 1 by the above-described devices, a work boundary setting device P13 sets the work boundary to define the preferential working region where the work can be finished, based on the location information of the preferential location set by the input, the location information of the non-preferential location, and the set working time.

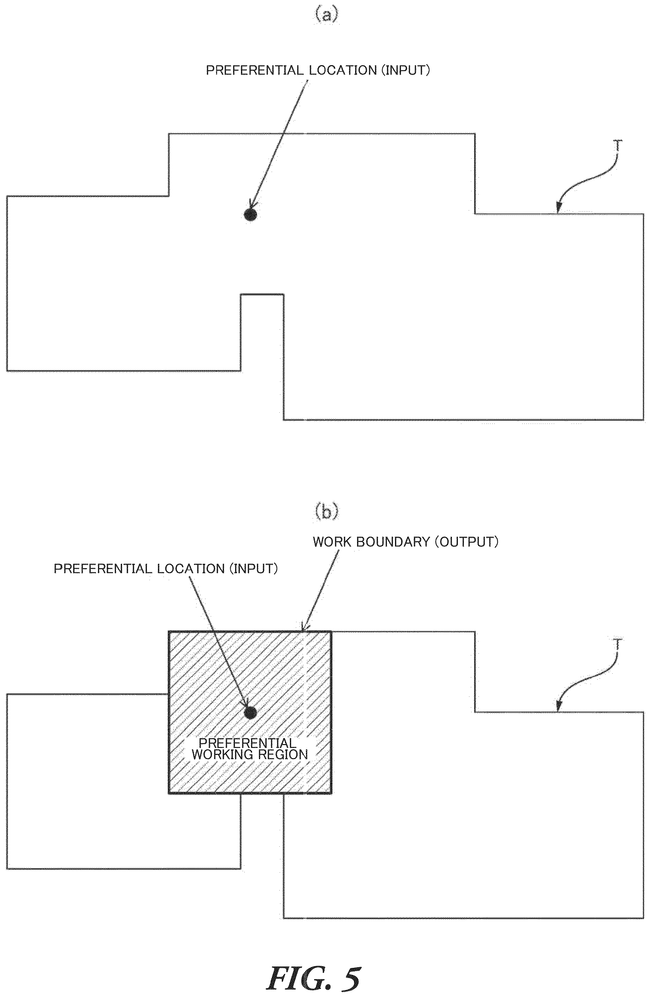

Examples of the setting by the work boundary setting device P13 will be specifically described. As illustrated in Fig. 5(a), the user selects a spot required to be prioritized on the map information of the work site T and inputs a preferential location. With the example illustrated in Fig. 5(a), the preferential location is inputted as spot information on the map information.

As an input method in this case, for example, the input device 54 is provided to allow input to the display 53 by operating a cursor on or touching the display 53, and the location information of the preferential location is inputted by operating a cursor on or touching the display screen on which the map information of the work site T is shown as illustrated in Fig. 5(a). However, the input method is not limited to this, but the coordinate of the location information may be inputted as numeric values by a keyboard and so forth.

After the preferential location is inputted, the setting controller P3 sets the preferential working region where the work can be finished, in view of, for example, the current work capacity of the working robot 1, and sets the work boundary to define this preferential working region. Here, the work boundary is a virtual line on the map information, which can be recognized by the working robot 1.

After the work boundary is set, the set work boundary may be displayed to overlap the map information of the work site T displayed on the display 53 as illustrated in Fig. 5(b). The preferential working region is set to include the position of the inputted preferential location. As an example, the preferential working region is set to place the inputted preferential location in the center of the preferential working region.

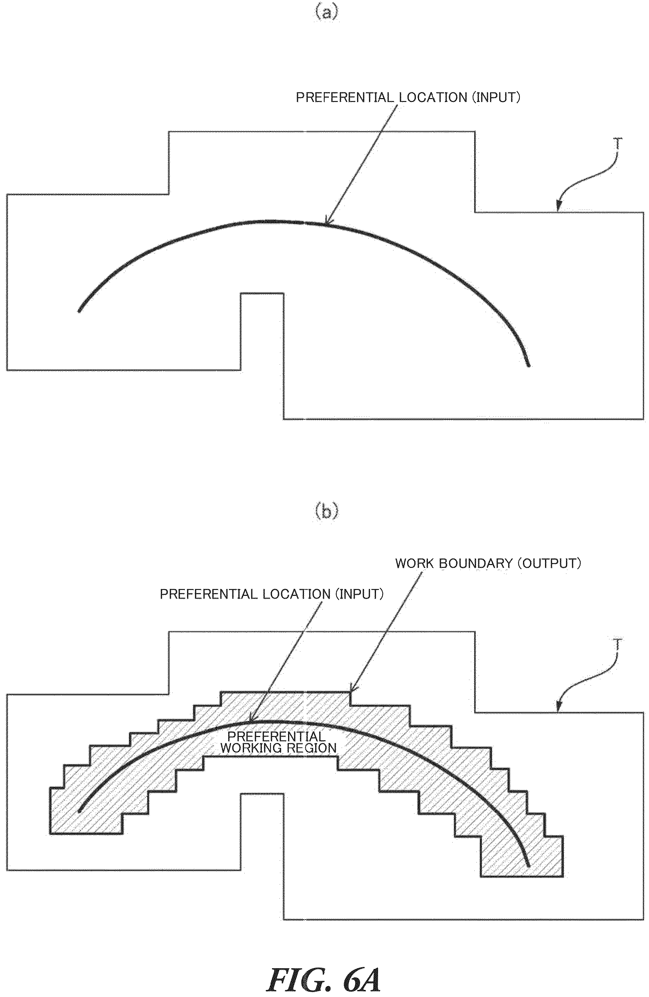

With an example illustrated in Fig. 6A(a), the preferential location set by the user is inputted as line information on the map information. As an input method in this case, the input device 54 is provided to allow input to the display 53 by touching the display 53, and the user traces with a finger on the display screen on which the map information of the work site T is shown as illustrated in Fig. 6A(a). By this means, it is possible to input the location information of the preferential location as a line.

In this case, the form of the inputted line is not limited, but may be a straight line, a curved line and so forth. In addition, the inputted line may be open at both ends as illustrated in Fig. 6A(a), or a loop line which is closed at both ends. The preferential location is inputted as the line information on the map information as illustrated in Fig. 6A(a), and in response to this, the preferential working region is set to include the inputted preferential location, and outputted onto the display screen as illustrated in Fig. 6A(b).

As described above, when the loop line is inputted as the preferential location, it means that the user inputs a tentative work boundary. In this case, the setting controller P3 corrects the tentative work boundary inputted by the user, and sets a work boundary to define the preferential working region where the work can be finished.

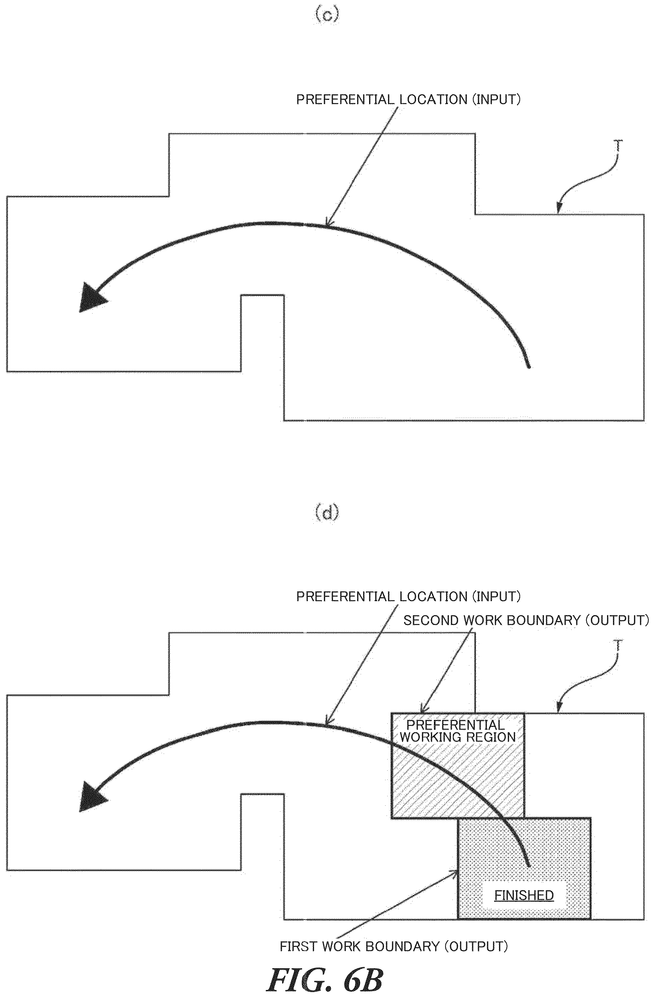

In addition, when the preferential location is inputted as line information on the map information, the direction of the inputted line is recognized as illustrated in Fig. 6B(c), and the preferential working region may be set sequentially along the direction of the tracing with the user's finger as illustrated in Fig. 6B(d). In this case, the preferential working region can be set at any time along the direction of the line such that, for example, when the working robot 1 returns to the charging base 103 after the work in one preferential working region defined by a first work boundary set first is finished, another preferential working region defined by a subsequent second work boundary is set.

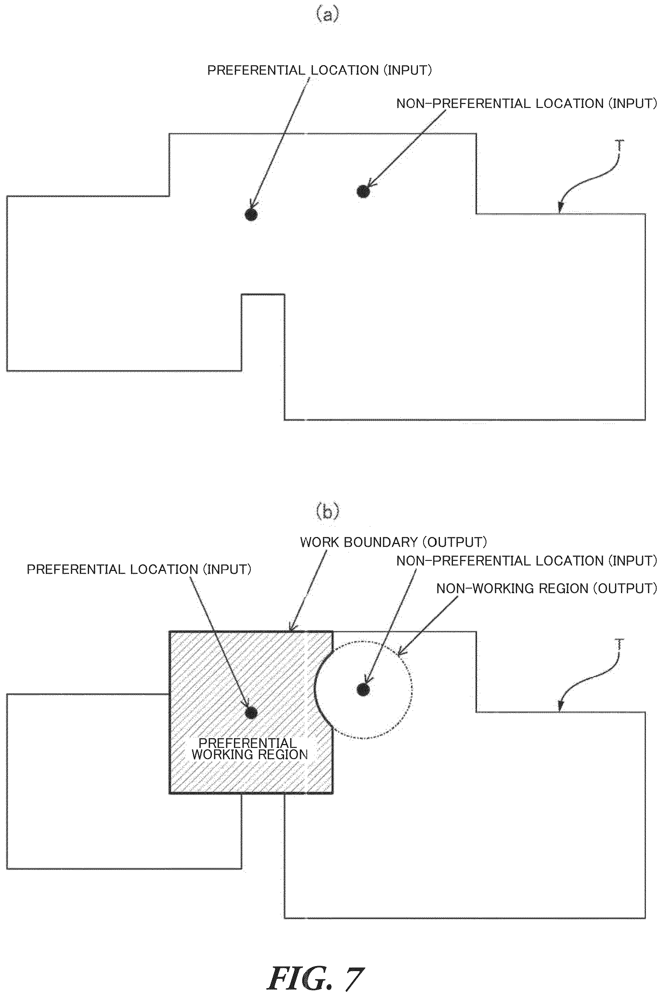

With an example illustrated in Fig. 7(a), as the location information inputted from the input device 54(5B), a non-preferential location is inputted in addition to the preferential location. The non-preferential location means a location which is not targeted for the preferential work at the time. When the location information of the non-preferential location is inputted, the setting controller P3 sets a work boundary to exclude the periphery of the non-preferential location from the preferential working region as illustrated in Fig. 7(b).

In this case, the location information of the non-preferential location may be inputted as a spot, a line or a loop line. When the location information of the non-preferential location is inputted, a non-working region is set around the non-preferential location, and a work boundary to define a preferential working region is set to exclude the set non-working region as illustrated in Fig. 7(b).

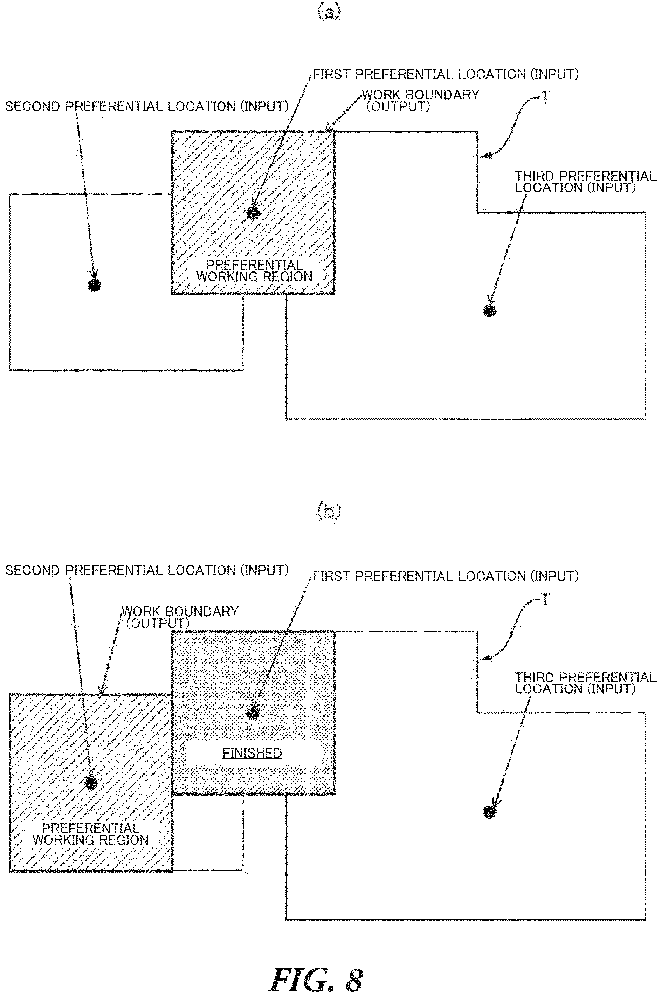

With an example illustrated in Fig. 8, a plurality of locations are set by the input as preferential locations. In this case, the setting controller P3 sets preferential working regions sequentially according to the priority of the plurality of preferential locations. Here, the current work capacity (for example, the amount of the remaining power in the battery) of the working robot varies every time the work in one preferential working region is ended. Therefore, after the work in the preferential working region set based on the location information of one preferential location is ended, the preferential working region for the location information of another preferential location is set.

That is, as illustrated in Fig. 8(a), when three preferential locations (first preferential location, second preferential location, and third preferential location) are set by the input, first a work boundary to define a preferential working region for the first preferential location is outputted, and the work is performed in this preferential working region. Then, after the work in the preferential working region for the first preferential location is finished, a work boundary to define a preferential working region for the second preferential location is outputted as illustrated in Fig. 8(b).

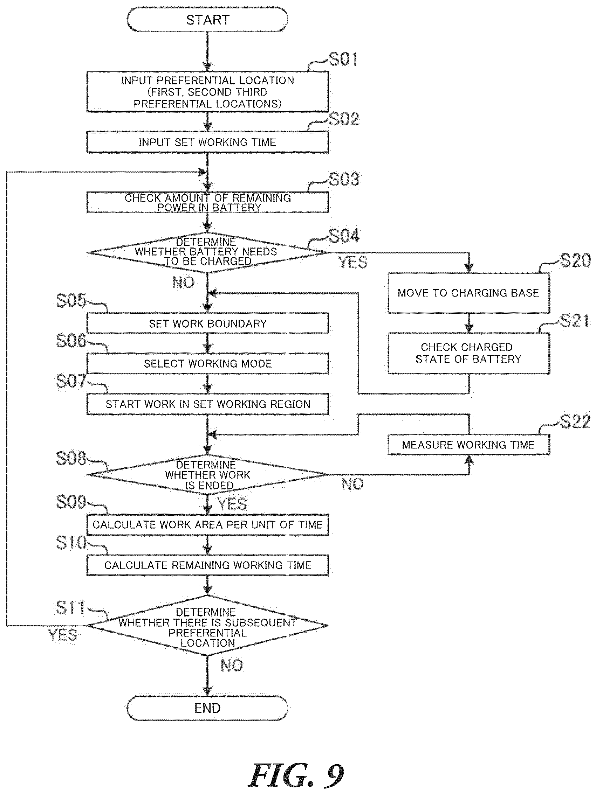

Fig. 9 illustrates an example of control flow of the controller 5U (5, 50, 60). After the start of the control, the preferential locations and the set working time are inputted in step S01 and step S02.

Next, in step S03, the current amount of the remaining power in the battery of the working robot 1 is checked. In step S04, it is determined whether the battery needs to be charged. When the current amount of the remaining power in the battery of the working robot 1 is equal to or lower than a set threshold, it is determined that the battery needs to be charged (step S04: YES), and traveling motion control to move the working robot 1 to the charging base 103 is performed (step S20). When the charging in the charging base 103 is ended, the current charged state of the battery is checked (step S21).

After the step S21, or when it is determined that the battery does not need to be charged (step S04: NO), the preferential working region is set as described above for one of the inputted preferential locations with the highest priority (first preferential location), in consideration of the current amount of the remaining power in the battery, and the work boundary to define this preferential working region is set (step S05).

After that, a working mode described later is selected (step S06), and the selected working mode is adopted, and then the work in the set working region is started (step S07). When it is determined that the work is being performed (step S08: NO), the working time is measured (step S22).

When it is determined that the work in the set one preferential working region is ended (step S08: YES), the map information of the preferential working region where the work has been finished, is stored in the memory 52 (5C).

Then, the area of the preferential working region where the work has been finished, is divided by the working time measured until the end of the work to calculate the work area per unit of time (step S09). Then, the measured working time is subtracted from the inputted set working time to calculate the remaining working time (step S10). The remaining working time and the work area per unit of time found here are indexes to find the area which can be handled in the remaining working time to start the next work.

When it is determined that there is a preferential location subsequent to the preferential location inputted in the step S01 (step S11: YES), the step S03 and the steps subsequent to the step S03 are repeated. In this case, to set the preferential working region for the next preferential location, not only the amount of the remaining power in the battery is checked in the step S03, but also the work area per unit of time found in the step S09 and the remaining working time found in the step S10 are considered, and the work boundary is set in the step S05, excluding the preferential working region where the work has been finished, stored in the memory 52 (5C). When it is determined that there is no next preferential location in step S11, the control is ended.

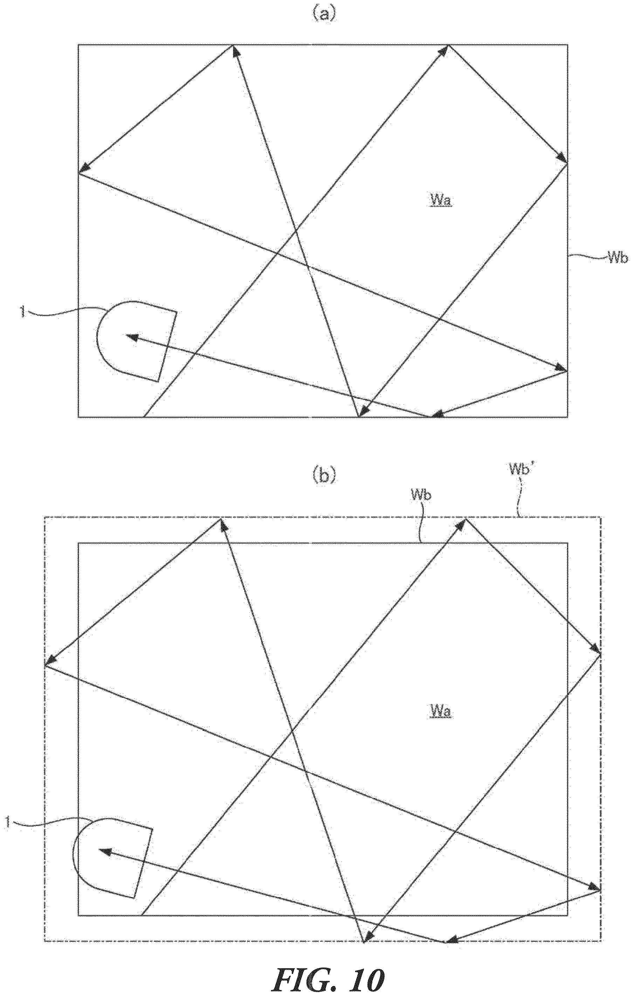

Fig. 10 to Fig. 12 illustrate the working modes described above. Examples illustrated in Fig. 10 describe a working mode for random traveling where the working robot 1 travels straight forward, and when reaching the vicinity of a set work boundary Wb, turns in any direction in a preferential working region Wa, and travels straight forward again.

With an example illustrated in Fig. 10(a), it is determined that the working robot 1 reaches the work boundary Wb, and therefore the working robot 1 is turned. Meanwhile, with an example illustrated in Fig. 10(b), an enlarged work boundary Wb' is set outside the set work boundary Wb. Then, it is determined that the working robot 1 reaches the enlarged work boundary Wb' and the working robot 1 is turned. As illustrated in Fig. 10(b), by setting the enlarged work boundary Wb', it is possible to avoid the unfinished work (leftover grass) in the work boundary Wb.

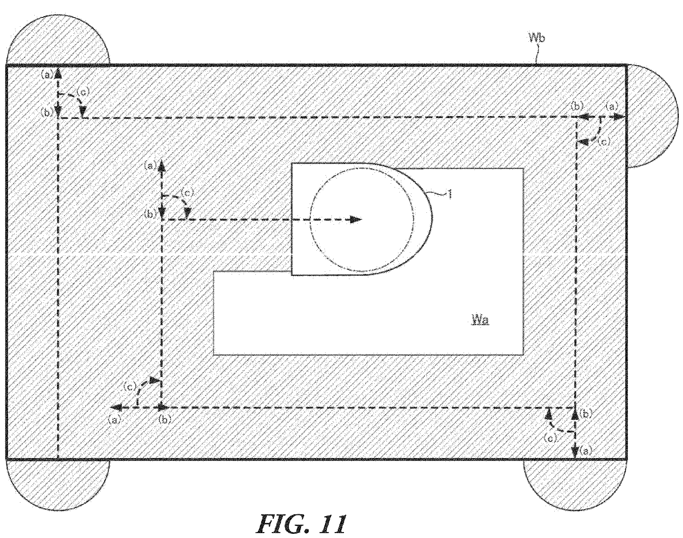

With an example illustrated in Fig. 11, for a rectangular work boundary Wb, turns along the periphery of the work boundary Wb from the outside to the inside form a striped working track. With the illustrated example in this case, the turning motion of the working robot 1 having reached the work boundary Wb is made by combining (a) motion of moving forward which partially overruns the work boundary Wb; (b) motion of moving backward; and (c) motion of turning at an angle of 90 degrees. By this means, it is possible to avoid the unfinished work (leftover grass) by the working device 3 having the circular working range in a plan view when the working robot 1 turns.

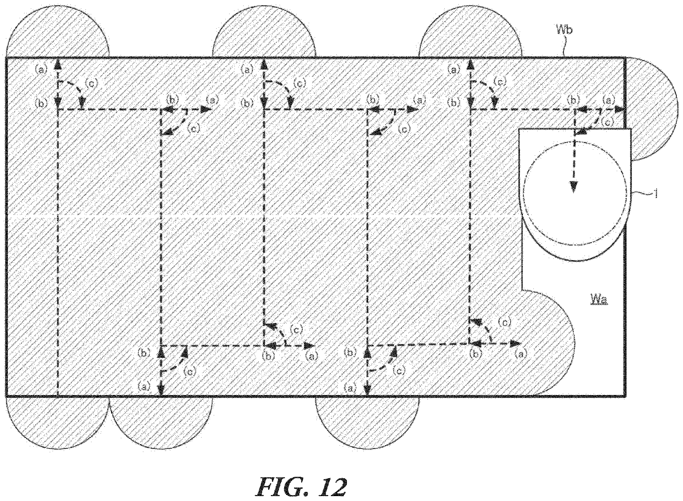

With an example illustrated in Fig. 12, for the rectangular work boundary Wb, a working track is formed by parallel stripes. Also, with the illustrated example in this case, the turning motion of the working robot 1 having reached the work boundary Wb is made by combining (a) motion of moving forward which partially overruns the work boundary Wb; (b) motion of moving backward; and (c) motion of turning at an angle of 90 degrees. By this means, it is possible to avoid the unfinished work (leftover grass) by the working device 3 having the circular working range in a plan view when the working robot 1 turns.

As described above, the working robot system 1S according to the embodiment of the invention allows the user to set the preferential working region required to the work, simply by inputting the preferential location. In addition, the preferential working region is set in view of the current work capability of the working robot 1, and therefore the working region where the work can be finished is set. By this means, it is possible to avoid the stop of the work in the preferential working region halfway, and therefore to efficiently finish the work in the preferential working region.

Moreover, when a plurality of preferential locations are set, the preferential working region for the next preferential location is set after the work in one preferential working region is ended. Therefore, it is possible to certainly exclude the finished working region to set the next preferential working region. By this means, it is possible to avoid overlapping work.

As described above, the embodiments of the present invention have been described in detail with reference to the drawings. However, the specific configuration is not limited to the embodiments, and the design can be changed without departing from the scope of the present invention. In addition, the above-described embodiments can be combined by utilizing each other's technology as long as there is no particular contradiction or problem in the purpose and configuration.

### Reference Signs List

1: working robot, 1S: working robot system,
2: traveling device, 2A front wheel, 2B: rear wheel,
3: working device
4: driving device, 4A front wheel driving part,
4B: rear wheel driving part, 4C: working device driving part,
5, 50, 60, 5U: controller,
5A, 51, 61: communication device,
5B, 54: input device, 5C, 52: memory,
53: display,
6: sensor, 6A: GNSS sensor,
6B: direction sensor, 6C: boundary detection sensor,
10: machine, 11: battery,
100: GNSS satellite, 101: server,102: mobile information terminal,
103: charging base, 103A: charging device,103B: commercial alternating-current power,
NT: network, Wa; preferential working region, Wb: work boundary,
P1: traveling motion controller,P2: working motion controller, P3: setting controller,
P10: working time timer,
P11: battery remaining amount calculator
P12: unit time work area calculator,
P13: work boundary setting device

## Claims

1. A working robot system (1s) comprising:
a working robot (1); and
a setting device (P13) configured to set a working region in which the working robot (1) performs work,
the working robot (1) comprising:
a machine (10) including a traveling device (2) configured to be able to autonomously travel;
a working device (3) configured to perform the work along a traveling route of the machine (10);
a driving device (4) configured to drive the traveling device (2) and the working device (3); and
a battery (11) as a power source of the driving device (4), **characterized in that** the setting device (P13) is further configured to:
receive from a user an input of a preferential location that is at least a spot, a line, or a direction on a map of a work site (T), and
set a work boundary (Wb) to define a preferential working region (Wa) in said work site (T) where the work can be finished, in view of work capacity of the working robot (1), based on location information of the inputted preferential location, wherein the work boundary (Wb) is a virtual line on said map, which can be recognized by the working robot (1).

2. The working robot system (1s) according to claim 1, wherein the work capacity is related to charging of the battery (11).

3. The working robot system (1s) according to claim 1, wherein the work capacity is equivalent to an area which can be handled.

4. The working robot system (1s) according to claim 1, wherein the working capacity depends on capacity of an internal memory of the working robot (1).

5. The working robot system (1s) according to one of claims 1 to 4, wherein when location information of a non-preferential location is inputted, the setting device (P13) sets the work boundary (Wb) to exclude a periphery of the non-preferential location from the preferential working region (Wa).

6. The working robot system (1s) according to one of claims 1 to 5, wherein the location information of the preferential location is received as a spot on the map.

7. The working robot system (1s) according to one of claims 1 to 5, wherein the location information of the preferential location is received as a line on the map.

8. The working robot system (1s) according to one of claims 1 to 7, wherein the location information of the preferential location is inputted by operating a cursor on or touching a display screen on which map information is displayed.

9. The working robot system (1s) according to one of claims 1 to 8, wherein in a case where location information of a plurality of preferential locations are set, after the work in a preferential working region (Wa) set based on location information of one preferential location is ended, the setting device (P13) sets a preferential working region (Wa) for location information of another preferential location.

10. The working robot system (1s) according to one of claims 1 to 9, wherein the setting device (P13) is provided in the working robot (1).

11. The working robot system (1s) according to one of claims 1 to 9, wherein the setting device (P13) is provided in a server (102) connected to the working robot (1) via a network (NT).

12. The working robot system (1s) according to one of claims 1 to 9, wherein the setting device (P13) is provided in a charging base (103) configured to charge the battery (11).

13. The working robot system (1s) according to one of claims 1 to 12, wherein when the location information of the preferential location is received from the user as a loop line that is closed at both ends, the setting device (P13) processes this loop line as a tentative work boundary and corrects this tentative work boundary to set the work boundary (Wb).

14. The working robot system (1s) according to one of claims 1 to 13, wherein the working device (3) includes a mowing blade configured to rotate around a vertical axis.

15. The working robot system (1s) according to one of claims 1 to 14, wherein the working robot (1) performs the work in the preferential working region (Wa) in a selected working mode.

## Patentansprüche

1. Arbeitsrobotersystem (1s), umfassend:
einen Arbeitsroboter (1); und
eine Einstellungsvorrichtung (P13), die zum Festlegen eines Arbeitsbereichs konfiguriert ist, in dem der Arbeitsroboter (1) Arbeiten durchführt,
wobei der Arbeitsroboter (1) umfasst:
eine Maschine (10), die eine Fahrvorrichtung (2) umfasst, die so konfiguriert ist, dass sie autonom fahren kann;
eine Arbeitsvorrichtung (3), die zum Durchführen der Arbeiten entlang einer Fahrroute der Maschine (10) konfiguriert ist;
eine Antriebsvorrichtung (4), die zum Antreiben der Fahrvorrichtung (2) und der Arbeitsvorrichtung (3) konfiguriert ist; und
einen Akkumulator (11) als Energiequelle der Antriebsvorrichtung (4),
**dadurch gekennzeichnet, dass** die Einstellungsvorrichtung (P13) ferner konfiguriert ist zum:
Empfangen, von einem Benutzer, einer Eingabe einer bevorzugten Position, die mindestens ein Punkt, eine Linie oder eine Richtung auf einer Karte von einer Arbeitsstelle (T) ist, und
Festlegen einer Arbeitsgrenze (Wb) zum Definieren eines bevorzugten Arbeitsbereichs (Wa) an der Arbeitsstelle (T), an dem die Arbeiten abgeschlossen werden können, in Anbetracht der Arbeitskapazität des Arbeitsroboters (1), auf der Basis von Ortsinformationen der eingegebenen bevorzugten Position, wobei die Arbeitsgrenze (Wb) eine virtuelle Linie auf der Karte ist, die durch den Arbeitsroboter (1) erkannt werden kann.

2. Arbeitsrobotersystem (1s) nach Anspruch 1, wobei die Arbeitskapazität mit dem Laden des Akkumulators (11) in Beziehung steht.

3. Arbeitsrobotersystem (1s) nach Anspruch 1, wobei die Arbeitskapazität äquivalent zu einem Bereich ist, der gehandhabt werden kann.

4. Arbeitsrobotersystem (1s) nach Anspruch 1, wobei die Arbeitskapazität von der Kapazität eines internen Speichers des Arbeitsroboters (1) abhängt.

5. Arbeitsrobotersystem (1s) nach einem der Ansprüche 1 bis 4, wobei, wenn Ortsinformationen einer nicht bevorzugten Position eingegeben werden, die Einstellungsvorrichtung (P13) die Arbeitsgrenze (Wb) festlegt, um eine Peripherie der nicht bevorzugten Position von dem bevorzugten Arbeitsbereich (Wa) auszuschließen.

6. Arbeitsrobotersystem (1s) nach einem der Ansprüche 1 bis 5, wobei die Ortsinformationen der bevorzugten Position als ein Punkt auf der Karte empfangen werden.

7. Arbeitsrobotersystem (1s) nach einem der Ansprüche 1 bis 5, wobei die Ortsinformationen der bevorzugten Position als eine Linie auf der Karte empfangen werden.

8. Arbeitsrobotersystem (1s) nach einem der Ansprüche 1 bis 7, wobei die Ortsinformationen der bevorzugten Position durch Betätigen eines Cursors auf oder Berühren von einem Anzeigebildschirm, auf dem Karteninformationen angezeigt werden, eingegeben werden.

9. Arbeitsrobotersystem (1s) nach einem der Ansprüche 1 bis 8, wobei in einem Fall, in dem Ortsinformationen einer Vielzahl von bevorzugten Positionen festgelegt werden, nachdem die Arbeiten in einem bevorzugten Arbeitsbereich (Wa), der auf der Basis von Ortsinformationen einer bevorzugten Position festgelegt wurde, beendet wurden, die Einstellungsvorrichtung (P13) einen bevorzugten Arbeitsbereich (Wa) für Ortsinformationen einer anderen bevorzugten Position festlegt.

10. Arbeitsrobotersystem (1s) nach einem der Ansprüche 1 bis 9, wobei die Einstellungsvorrichtung (P13) in dem Arbeitsroboter (1) vorgesehen ist.

11. Arbeitsrobotersystem (1s) nach einem der Ansprüche 1 bis 9, wobei die Einstellungsvorrichtung (P13) in einem Server (102) vorgesehen ist, der mit dem Arbeitsroboter (1) über ein Netzwerk (NT) verbunden ist.

12. Arbeitsrobotersystem (1s) nach einem der Ansprüche 1 bis 9, wobei die Einstellungsvorrichtung (P13) in einer Ladestation (103) vorgesehen ist, die zum Laden des Akkumulators (11) konfiguriert ist.

13. Arbeitsrobotersystem (1s) nach einem der Ansprüche 1 bis 12, wobei, wenn die Ortsinformationen der bevorzugten Position von dem Benutzer als eine Schleifenlinie empfangen werden, die an beiden Enden geschlossen ist, die Einstellungsvorrichtung (P13) diese Schleifenlinie als eine vorläufige Arbeitsgrenze verarbeitet und diese vorläufige Arbeitsgrenze korrigiert, um die Arbeitsgrenze (Wb) festzulegen.

14. Arbeitsrobotersystem (1s) nach einem der Ansprüche 1 bis 13, wobei die Arbeitsvorrichtung (3) eine Mähklinge umfasst, die zum Drehen um eine vertikale Achse konfiguriert ist.

15. Arbeitsrobotersystem (1s) nach einem der Ansprüche 1 bis 14, wobei der Arbeitsroboter (1) die Arbeiten in dem bevorzugten Arbeitsbereich (Wa) in einem ausgewählten Arbeitsmodus durchführt.

## Revendications

1. Système de robot de travail (1s) comprenant :
un robot de travail (1) ; et
un dispositif de réglage (P13) configuré pour définir une région de travail dans laquelle le robot de travail (1) effectue un travail,
le robot de travail (1) comprenant :
une machine (10) incluant un dispositif itinérant (2) configuré pour être capable de se déplacer de manière autonome ;
un dispositif de travail (3) configuré pour effectuer le travail le long d'une route itinérante de la machine (10) ;
un dispositif d'entraînement (4) configuré pour entraîner le dispositif itinérant (2) et le dispositif de travail (3) ; et
une batterie (11) en tant que source d'énergie du dispositif d'entraînement (4),
**caractérisé en ce que** le dispositif de réglage (P13) est en outre configuré pour :
recevoir d'un utilisateur une entrée d'un emplacement préférentiel qui est au moins un point, une ligne ou une direction sur une carte d'un site de travail (T), et
définir une délimitation de travail (Wb) pour définir une région de travail préférentielle (Wa) dans ledit site de travail (T) où le travail peut être fini, compte tenu de la capacité de travail du robot de travail (1), sur la base d'informations d'emplacement de l'emplacement préférentiel entré, dans lequel la délimitation de travail (Wb) est une ligne virtuelle sur ladite carte, qui peut être reconnue par le robot de travail (1).

2. Système de robot de travail (1s) selon la revendication 1, dans lequel la capacité de travail est liée à la charge de la batterie (11).

3. Système de robot de travail (1s) selon la revendication 1, dans lequel la capacité de travail est équivalente à une zone qui peut être poignée.

4. Système de robot de travail (1s) selon la revendication 1, dans lequel la capacité de travail dépend de la capacité d'une mémoire interne du robot de travail (1).

5. Système de robot de travail (1s) selon l'une des revendications 1 à 4, dans lequel, lorsque des informations d'emplacement d'un emplacement non préférentiel sont entrées, le dispositif de réglage (P13) définit la délimitation de travail (Wb) pour exclure une périphérie de l'emplacement non préférentiel de la région de travail préférentielle (Wa).

6. Système de robot de travail (1s) selon l'une des revendications 1 à 5, dans lequel les informations d'emplacement de l'emplacement préférentiel sont reçues en tant que point sur la carte.

7. Système de robot de travail (1s) selon l'une des revendications 1 à 5, dans lequel les informations d'emplacement de l'emplacement préférentiel sont reçues en tant que ligne sur la carte.

8. Système de robot de travail (1s) selon l'une des revendications 1 à 7, dans lequel les informations d'emplacement de l'emplacement préférentiel sont entrées en actionnant un curseur sur ou en touchant un écran d'affichage sur lequel des informations de carte sont affichées.

9. Système de robot de travail (1s) selon l'une des revendications 1 à 8, dans lequel, dans un cas où des informations d'emplacement d'une pluralité d'emplacements préférentiels sont définies, après que le travail dans une région de travail préférentielle (Wa) définie sur la base d'informations d'emplacement d'un emplacement préférentiel est terminé, le dispositif de réglage (P13) définit une région de travail préférentielle (Wa) pour des informations d'emplacement d'un autre emplacement préférentiel.

10. Système de robot de travail (1s) selon l'une des revendications 1 à 9, dans lequel le dispositif de réglage (P13) est prévu dans le robot de travail (1).

11. Système de robot de travail (1s) selon l'une des revendications 1 à 9, dans lequel le dispositif de réglage (P13) est prévu dans un serveur (102) connecté au robot de travail (1) via un réseau (NT).

12. Système de robot de travail (1s) selon l'une des revendications 1 à 9, dans lequel le dispositif de réglage (P13) est prévu dans une base de chargement (103) configurée pour charger la batterie (11).

13. Système de robot de travail (1s) selon l'une des revendications 1 à 12, dans lequel, lorsque les informations d'emplacement de l'emplacement préférentiel sont reçues de l'utilisateur en tant que ligne de boucle qui est fermée aux deux extrémités, le dispositif de réglage (P13) traite cette ligne de boucle en tant que délimitation de travail provisoire et corrige cette délimitation de travail provisoire pour définir la délimitation de travail (Wb).

14. Système de robot de travail (1s) selon l'une des revendications 1 à 13, dans lequel le dispositif de travail (3) inclut une lame de tondeuse configurée pour tourner autour d'un axe vertical.

15. Système de robot de travail (1s) selon l'une des revendications 1 à 14, dans lequel le robot de travail (1) effectue le travail dans la région de travail préférentielle (Wa) dans un mode de travail sélectionné.
